# EUROPÄISCHE PATENTSCHRIFT

(11) **EP 0 376 015 B1**
(45) Veröffentlichungstag und Bekanntmachung des Hinweises auf die Patenterteilung: **17.03.1993**
(21) Anmeldenummer: 89122602.9
(22) Anmeldetag: 07.12.1989
(51) Int. Cl.: B23K 9/28

(54) **Schutzgasschweissbrenner zum Lichtbogenschweissen mit abschmelzender Elektrode**
Welding torch with a shielding gas for arc welding with a consumable electrode
Torche de soudage à gaz de protection pour le soudage à l'arc avec électrode consumable

(30) Priorität: 24.12.1988 DE 3843770
(43) Veröffentlichungstag der Anmeldung: 04.07.1990
(73) Patentinhaber: MESSER LINCOLN GMBH, D-65933 Frankfurt (DE)
(72) Erfinder: Dick, Reinhard, D-6250 Limburg 4 (DE); Diehl, Thomas, D-6293 Löhnberg 2 (DE); Endres, Gerhard, D-6361 Niddatal 3 (DE)
(74) Vertreter: Roesner, Werner

(56) Entgegenhaltungen:
- FR-A- 2 299 113
- WELDING PRODUCTION. vol. 30, no. 3, März 1983, CAMBRIDGE GB Seite 46 ZEMLEVSKII: "A torch for automatic gas shielded welding with an immersed arc using a consumable electrode"

## Beschreibung

Die Erfindung betrifft einen Schutzgasschweißbrenner zum Lichtbogenschweißen mit abschmelzender Elektrode nach dem Oberbegriff des Anspruches 1 und wie er beispielsweise aus der DE-PS 32 40 715 bekannt geworden ist.

Der Erfindung liegt die Aufgabe zugrunde, bei einem Schutzgasschweißbrenner dieser Art die Kühlung und damit die Standzeit der Schutzgasdüse sowie die mit der Schutzgasdüse in Verbindung stehenden Teile zu verbessern.

Diese Aufgabe wird erfindungsgemäß durch die Merkmale des Anspruches 1 gelöst.

Weitere vorteilhafte Ausbildungen der Erfindung sind in den Unteransprüchen angegeben.

Die mit der Erfindung erzielten Vorteile bestehen insbesondere darin, daß durch die hintereinander geschalteten Zwangskreisläufe für das Kühlwasser sowohl der Gasdüsenträger als auch der Stromkontaktdüsenträger direkt gekühlt werden. Ferner erfolgt eine komplette Kühlung des Brennerrüssels, was auch zu einem kühleren Handgriff führt. Damit ist es einem Schweißer nunmehr ohne weiteres möglich, z. B. in schwierigen Schweißpositionen den Brenner mit zwei Händen zu führen, wobei eine Hand am "kalten Brennerrüssel" angreifen kann. Durch die verbesserte Kühlung erhöht sich somit auch die Standzeit der Brennerverschleißteile wie Schutzgasdüse und Stromkontaktdüse sowie die Belastbarkeit des gesamten Brenners, und zwar ohne Vergrößerung des Brennervolumens. Ferner wird durch den insgesamt kühleren Brenner die Spritzeranhaftung vermindert.

Ein Ausführungsbeispiel der Erfindung ist in der Zeichnung dargestellt und wird im folgenden näher beschrieben. Es veranschaulicht
Fig. 1 einen Schutzgasschweißbrenner mit gestrecktem Brennerrüssel, teilweise geschnitten
Fig. 2 eine vergrößerte Darstellung der Einzelheit E in Fig. 1
Fig. 3 einen Schnitt längs der Linie A-B in Fig. 1

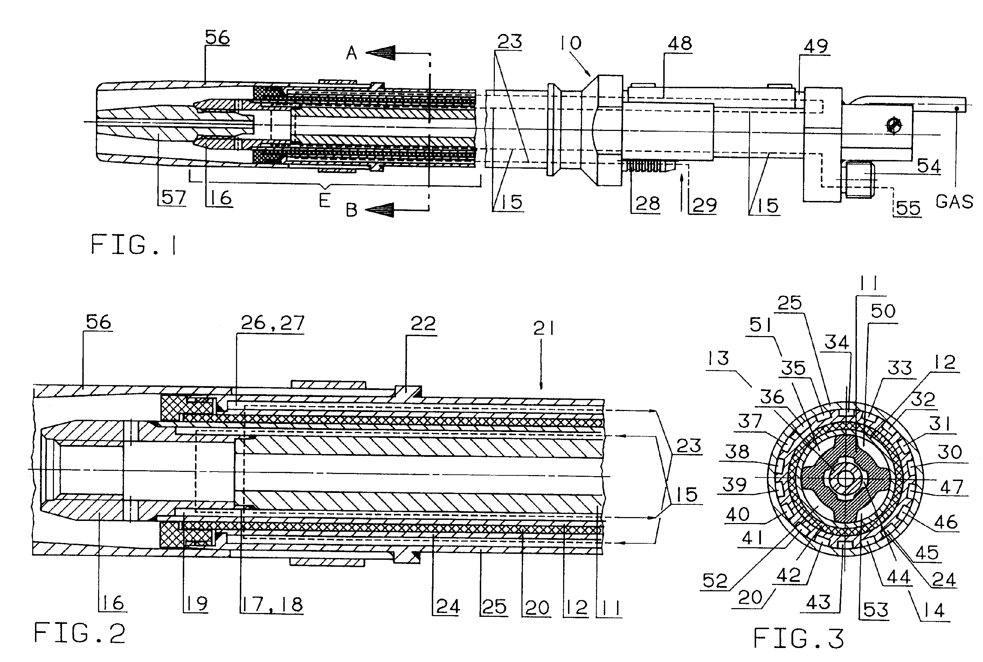

Der in Fig. 1 seiner Gesamtheit mit 10 bezeichnete Schutzgasschweißbrenner weist zwei konzentrische, schweißstromführende Rohre 11, 12 auf. Das Innenrohr 11 dient zur Schweißschutzgaszufuhr und zur Elektrodendrahtführung, wobei die nicht dargestellte abschmelzende Drahtelektrode z. B. in einer Drahtspirale 13 (s. Fig. 3) und im Zwischenraum 14 zwischen der Drahtspirale 13 und dem Innenrohr 11 des Schutzgases geführt werden.

Das Innenrohr 11 bildet mit dem Außenrohr 12 einen ersten Zwangskreislauf 15 für das Kühlwasser, wobei Innen- und Außenrohr 11 bzw. 12 in einem Stromkontaktdüsenträger 16 befestigt sind. Dabei ist bevorzugt der Stromkontaktdüsenträger 16 mit den Rohren 11, 12 durch Löten verbunden und derart den beiden Rohren zugeordnet, daß die im Umfang 17 des Trägers 16 vorgesehene Eindrehung 18 die innere Begrenzung für den Wasserumlaufringkanal 19 bildet.

Das Außenrohr 12 wird von einer elektrischen Isolierung 20, die vorzugsweise aus einem PTFE-Schlauch besteht, konzentrisch umgeben. Die Isolierung 20 ist konzentrisch von einem Mantel 21 umgeben, an dessen dem Stromkontaktdüsenträger 16 zugeordneten Ende ein Gasdüsenträger 22 angeordnet ist. Der Mantel 21 weist zur Bildung eines zweiten Zwangskreislaufes 23 für das Kühlmittel zwei konzentrisch angeordnete Kühlrohre 24, 25 auf, die im Gasdüsenträger 22 durch Löten verbunden sind. In Verbindung mit der Ausdrehung 26 wird ein Kühlwasserumlaufringkanal 27 gebildet. An den Eingang 28 des zweiten Zwangskreislaufes 23 ist ein Wasservorlauf 29 angeschlossen, so daß (s. Fig. 1) Kühlwasser zunächst über die äußeren Kühlkanäle 39 - 47 zum Kühlwasserumlaufringkanal 27 im Gasdüsenträger 22 geführt wird und von diesem über die äußeren Kühlkanäle 30 - 38 zurück zum Ausgang 48 des zweiten Kreislaufs 23 geleitet wird. Dieser Ausgang 48 ist mit dem Eingang 49 des ersten Zwangskreislaufes 15 verbunden, so daß das Kühlwasser nunmehr durch die beiden inneren Kühlkanäle 50, 51 zum Wasserumlaufringkanal 19 im Stromkontaktdüsenträger 16 strömt. Von diesem wird das Kühlwasser über die weiteren inneren Kühlkanäle 52, 53 zum Ausgang 54 des ersten Zwangskreislaufes 15 geführt und von diesem über das Strom-Wasserrücklaufkabel 55, beispielsweise zu einem Wasserrückkühlgerät, geleitet.

Durch diese Hintereinanderschaltung von Kühlwasserkreisläufen wird zunächst direkt der Gasdüsenträger 22 und damit indirekt die hierauf befestigte Gasdüse 56 und anschließend direkt der Stromkontaktdüsenträger 16 und somit indirekt die eingeschraubte Kontaktdüse 57 gekühlt, wodurch eine besonders intensive Kühlung des genannten Schweißbrenners erreicht wird. Zur Erzielung einer einfachen Konstruktion ist das Innenrohr 11 sowie das innere Kühlrohr 24 als Profil-/Rippenrohre ausgebildet. Dabei sind die Querschnittsflächen/Durchströmquerschnitte innerhalb des zweiten Zwangskreislaufes 23 gleich bemessen, d. h. die Summe der Durchströmquerschnitte der Kühlkanäle 30 - 38 entspricht dem Durchströmquerschnitt des Wasserumlaufringkanals 19 sowie der Summe der Durchströmquerschnitte 39 - 47.

Auch die Durchströmquerschnitte des ersten Zwangskreislaufes 15 sind gleich bemessen, d. h. die Summe der Durchströmquerschnitte der Kanäle 50 und 51 entsprechen der Summe der Durchströmquerschnitte der Kanäle 52 und 53 sowie dem Querschnitt des Wasserumlaufringkanales 19. Durch diese Dimensionierung wird eine besonders gute Wärmeabführung erreicht.

## Patentansprüche

1. Schutzgasschweißbrenner (10) zum Lichtbogenschweißen mit abschmelzender Elektrode mit zwei konzentrischen, schweißstromführenden Rohren (11, 12), von denen das Innenrohr zur Gaszufuhr und Elektrodendrahtführung dient und mit dem darüberliegenden Außenrohr (12) einen ersten Zwangskreislauf (15) für das Kühlwasser bildet und wobei Innen (11)- und Außenrohr (12) in einem Stromkontaktdüsenträger (16) befestigt sind, sowie mit einer das Außenrohr konzentrisch umgebenden Isolierung (20), die ihrerseits konzentrisch von einem Mantel umgeben ist, an dessen dem Stromkontaktdüsenträger (16) zugeordnetem Ende ein Gasdüsenträger (22) angeordnet ist,
dadurch gekennzeichnet,
daß der Mantel (21) zur Bildung eines zweiten Zwangskreislaufes (23) für das Kühlmittel zwei konzentrisch angeordnete Kühlrohre (24, 25) aufweist, die im Gasdüsenträger (22) befestigt sind und einen Kühlwasserumlaufkanal (27) im Gasdüsenträger (22) bilden und
daß ferner an dem Eingang (28) des zweiten Zwangskreislaufes (23) ein Wasservorlauf (29) angeschlossen ist, dessen Ausgang (48) mit dem Eingang (49) des ersten Zwangskreislaufes (15) in Verbindung steht und der Ausgang (54) des ersten Zwangskreislaufes (15) mit dem Stromwasserrücklaufkabel (55) verbunden ist.

2. Schutzgasschweißbrenner nach Anspruch 1,
dadurch gekennzeichnet,
daß das Innenrohr (11) sowie das innere Kühlrohr (24) als Profil-/Rippenrohr ausgebildet sind.

3. Schutzgasschweißbrenner nach Anspruch 1 oder 2,
dadurch gekennzeichnet,
daß die Querschnittsflächen/Durchströmquerschnitte innerhalb des ersten bzw. des zweiten Zwangskreislaufes (15 bzw. 23) gleich bemessen sind.

## Claims

1. An inert gas welding torch (10) for arc welding with consumable electrodes having two concentric welding-current-carrying tubes (11, 12), of which the inner tube serves for the supply of gas and for carrying the electrode wires and with the outer tube (12) superimposed on it forms a first forced circulation (15) for the cooling water, the inner tube (11) and outer tube (12) being secured in a current contact nozzle carrier (16), and having an insulation (20) concentrically surrounding the outer tube, which insulation in its turn is surrounded by a jacket, on the end of which associated with the current contact nozzle carrier (16) there is arranged a gas nozzle carrier (22), characterized in that, to form a second forced circulation (23) for the coolant, the jacket (21) comprises two concentrically arranged cooling tubes (24, 25) which are fixed in the gas nozzle carrier (22) and form a cooling water circulation channel (27) in the gas nozzle carrier (22), and that furthermore a water supply (29) is connected to the inlet (28) of the second forced circulation (23), the outlet (48) of which is connected to the inlet (49) of the first forced circulation (15) and the outlet (54) of the first forced circulation (15) is connected to the current and water-return line (55).

2. An inert gas welding torch according to claim 1, characterized in that the inner tube (11) and the inner cooling tube (24) are in the form of a profiled or ribbed tube.

3. An inert gas welding torch according to claim 1 or 2, characterized in that the cross-sectional areas/flow cross-sections within the first and second forced circulation (15 and 23 respectively) are of identical dimensions.

## Revendications

1. Chalumeau de soudure à l'arc sous protection gazeuse (10) par le moyen d'une électrode de fusion, comportant deux tubes concentriques (11, 12) d'amenée du courant de soudage, le tube interne servant à l'amenée du gaz et au guidage du fil d'électrode et délimitant, avec le tube externe (12) qui l'entoure, un premier circuit (15) de passage obligé pour l'eau de refroidissement, les tubes interne (11) et externe (12) étant fixés à un support (16) de la tuyère de contact électrique, tandis que le tube externe est entouré d'une couche isolante concentrique (20), elle-même entourée concentriquement par une enveloppe dont l'extrémité en regard du support (16) de la tuyère de contact électrique, est munie d'un support (22) de tuyère à gaz, caractérisé en ce que l'enveloppe (21), afin de réaliser un second circuit (23) de passage obligé de l'eau de refroidissement, comporte deux tubes concentriques (24, 25) fixés au support (22) de la tuyère à gaz et délimitant dans celle-ci un canal périphérique (27) de circulation de l'eau de refroidissement, l'entrée (28) du second circuit (23) à passage obligé étant reliée à une amenée d'eau (29), tandis que sa sortie (48) est reliée à l'entrée (49) du premier circuit (15) à passage obligé dont la sortie (54) est elle-même reliée à la gaine de retour (55) de l'eau.

2. Chalumeau de soudure sous protection gazeuse selon la revendication 1, caractérisé en ce que le tube intérieur (11) et le tube intérieur de refroidissement (24) sont réalisés au moyen de profilés à rainures.

3. Chalumeau de soudure sous protection gazeuse selon la revendication 1 ou 2, caractérisé en ce que les sections de passage de l'eau, dans le premier et dans le second circuit (15 et 23) sont égales entre elles.
